# EUROPEAN PATENT APPLICATION

(11) **EP 3 866 023 A1**
(43) Date of publication of application: **18.08.2021**
(21) Application number: 20156564.5
(22) Date of filing: 11.02.2020
(51) Int. Cl.: G06F 16/21, G06F 16/901

(54) **METHOD AND SYSTEM FOR CONSOLIDATION OF DATA OF A SOURCE SYSTEM**

(71) Applicant: Siemens Aktiengesellschaft, 80333 München (DE)
(72) Inventor: Aaftink, Gert Jan, 2321 DJ Leiden (NL); Haegel, Stefan, 96199 Zapfendorf (DE)

(57) **Abstract**

The invention relates to a data consolidation system (1) for the combination of data, comprising at least one source system (2) containing data (3) with at least one dataset (4), and a semantic data unit (5), connected to the source system (2), which analyses the data (3) of the source system (2). According to the invention the semantic data unit (5) derives the meaning (7) of all datasets (4) ontologically in an ontology module (6), identifies all data (3) with the same meaning (7) of the analyzed dataset (4), checks the data integrity of the analyzed data (3) under consideration of the meaning (7) and stores the data (2) and the meaning (7) of the data together in a comprehensive data system (8).

## Description

The invention relates to a method and system for consolidation of data of a source system.

Access to a wide range of data sources such as sensors and databases is gaining more and more importance for developing and using industrial data applications, in particular applications analyzing data by data sources of automation systems.

In the engineering domain data that are describing the same object are often stored in different systems and formats. As an example, ID, 2D and 3D engineering data of the same physical object are typically stored in different systems, often with different identifiers. These source systems evolved over the last decades being either developed in house within a company or by third parties. Therefore, it is in most cases not possible to replace these systems by one comprehensive solution that manages all engineering data.

Since the source systems are not coupled, data changes need to be replicated manually in every single system that holds the affected data. In addition, some of these data are delivered by subcontractors or external suppliers with typically unknown data quality. Thus, ensuring data integrity over all involved systems is currently a severe problem.

Up to now this problem has mainly been solved by manually cross-checking data from different sources. Especially data coming from external third parties need to be manually cross checked by an inhouse engineer or operator before being fed into the source systems. This is an expensive and error prone process.

Accordingly, it is an object of the present invention to provide a method and system enabling a controlled and automated data combining between data of different source systems, to offer one comprehensive solution that manages all engineering data in high quality.

The object is achieved according to a first aspect of the present invention by a data consolidation system comprising the features of claim 1.

The invention provides a data consolidation system for the combination of data, comprising at least one source system containing data with at least one dataset, and a semantic data unit, connected to the source system, which analyses the data of the source system. The semantic data unit is characterized in, that it derives the meaning of all datasets ontologically in an ontology module, identifies all data with the same meaning of the analyzed dataset, checks the data integrity of the analyzed data under consideration of the meaning, and stores the data and the meaning of the data together in a comprehensive data system.

The core of the invention is using a semantic data unit that allows storing the data from the source systems together with their meaning. The meaning is hereby derived from the source systems using an ontology. The invention uses a semantic data model to compare and store data. In a semantic data model not only the data themselves are stored but also their meaning and how they are linked together. Once the meaning is known all data with the same meaning can be extracted and compared automatically. The meaning of the data is derived from the source systems using domain ontologies that are combined via a top-level ontology.

The advantage of the invention is to allow automated checking and combining data coming from external parties before they are fed into the source systems. With this invention external parties can deliver their data in a self-service style without the need to manually check the data before. The proposed invention will help to improve project execution in projects where engineering plays a significant role. It will prevent failures in the project execution coming from wrong and inconsistent data.

In a possible embodiment of the data consolidation system, the ontology module is deriving the meaning by identification of other datasets in the data with identical meaning and confirmation that these datasets have identical values. The identification can be processed automatically, and the data integrity can be checked across all source systems. Automatic data integrity checks are faster, cheaper and less error prone than manual checks. Thus, they can be run more frequent over data from all source systems. This will lead to higher data quality. In addition, the check routines applied on the data will evolve over time to ensure learning from problems in processed projects. A precondition to run automatic data integrity checks over data from all source systems is that the meaning of the data is known.

In a further possible embodiment of the data consolidation system, the semantic data unit is executed on a processor of a computer which is adapted to receive data from at least one connected source system, and to store the processed data to at least one connected comprehensive data system.

In a further possible embodiment of the data consolidation system, the source system comprises structured data or unstructured raw data of a physical object. The physical object can be for example a technical unit like a power plant or a component of a power plant, like a turbine or a heat exchanger. The data can be engineering or technical design data for construction of the physical object, for example 1D data like pipe diameter, material, wall thickness, insulation or connections, 2D data like pipe isometrics or 3D data like planning. The data can also be drawings, documentation, logistic data, tracking progress of site erection works, prefabrication scope, weld lists, connections of specific data for electrical components and cables or procurement data.

In a still further embodiment of the data consolidation system, the semantic data unit labels the data with meta information about the unstructured data and/or structured data comprising source data quality metrics and/or key performance indicators.

In a further possible embodiment of the data consolidation system, at least one further source system is comprised, whereby the semantic data unit derives the meaning of each dataset of the data of all source systems and stores the data and the meaning of the data together in the comprehensive data system.

In a further possible embodiment of the data consolidation system, the semantic data unit gives an alert message in case of data inconsistencies are found. This allows automatically alerting the users when data inconsistencies are found.

In a further possible embodiment of the data consolidation system, the semantic data unit is implemented on a cloud platform communicating with the source systems via a data network.

In a further possible embodiment of the data consolidation system, the data comprise time stamps indicating the time when the data have been been processed by the semantic data unit.

The invention provides according to the second aspect a method for the consolidation of data comprising the features of claim 1.

The method for the consolidation of data, comprising at least one source system containing data with at least one dataset, and a semantic data unit, connected to the source system, which analyses the data of the source system, whereby the semantic data unit derives the meaning of all datasets ontologically in an ontology module, identifies all data with the same meaning of the analyzed dataset, checks the data integrity of the analyzed data under consideration of the meaning, and stores the data and the meaning of the data together in a comprehensive data system.

In a possible embodiment of the method for the consolidation of data, the ontology module is deriving the meaning by identification of other datasets in the data with identical meaning and confirmation that these datasets have identical values.

In a further possible embodiment of the method for the consolidation of data, the semantic data unit is executed on a processor of a computer which is adapted to receive data from at least one connected source system, and to store the processed data to at least one connected comprehensive data system.

In a further possible embodiment of the method for the consolidation of data, the source system comprises structured data or unstructured raw data of a physical object.

In a further possible embodiment of the method for the consolidation of data, the semantic data unit labels the data with meta information about the unstructured data and/or structured data comprising source data quality metrics and/or key performance indicators.

In a further possible embodiment of the method for the consolidation of data, at least one further source system is comprised, whereby the semantic data unit derives the meaning of each dataset of the data of all source systems and stores the data and the meaning of the data together in the comprehensive data system.

In a further possible embodiment of the method for the consolidation of data, the semantic data unit gives an alert message in case of data inconsistencies are found.

In a further possible embodiment of the method for the consolidation of data, the semantic data unit is implemented on a cloud platform communicating with the source systems via a data network.

In a further possible embodiment of the method for the consolidation of data, the data comprise time stamps indicating the time when the data has been processed by the semantic data unit.

In the following, possible embodiments of the different aspects of the present invention are described in more detail with reference to the enclosed figures.
- Fig. 1: shows a schematic block diagram for illustrating a possible exemplary embodiment of a method and System for consolidation of data of a source system according to the present invention.
- Fig. 2: shows a schematic block diagram for illustrating a method and System for consolidation of data of a source system according to a first further embodiment of the present invention;
- Fig. 3: shows a schematic block diagram for illustrating a method and System for consolidation of data of a source system according to a second further embodiment of the present invention.

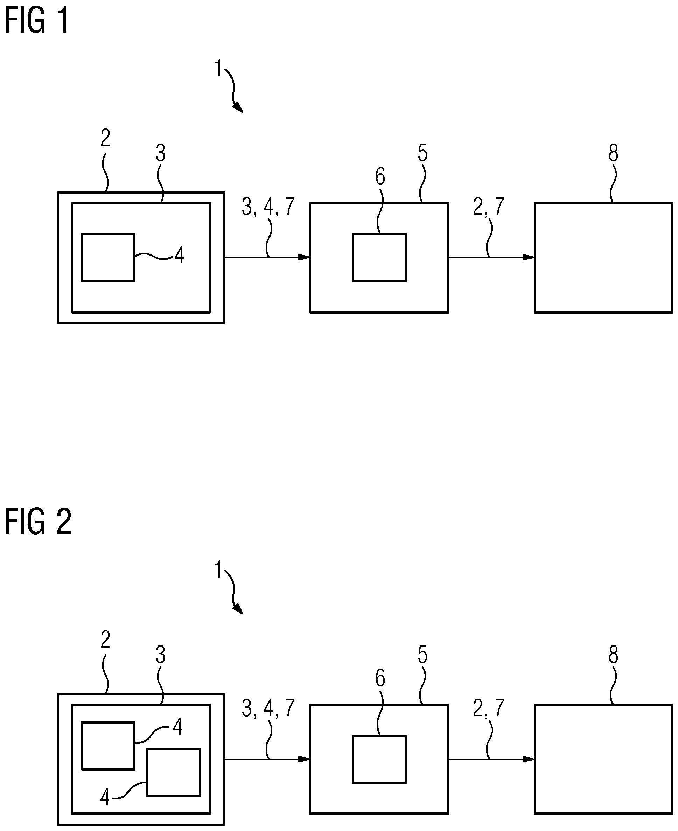

The illustrated embodiment of Fig. 1 shows a data consolidation system 1 for the combination of data which comprises one source system 2 containing data 3 with at least one dataset 4, and a semantic data unit 5, connected to the source system 2, which analyses the data 3 of the source system 2. The semantic data unit 5 derives the meaning 7 of all datasets 4 ontologically in an ontology module 6, identifies all data 3 with the same meaning 7 of the analyzed dataset 4, checks the data integrity of the analyzed data 3 under consideration of the meaning 7, and stores the data 2 and the meaning 7 of the data together in a comprehensive data system 8.
Following approach is used to create an ontology from which the meaning of datasets is derived (see also drawing below):
The illustrated embodiment of Fig. 2 shows a further embodiment of the data consolidation system 1 according to Fig. 1, wherein the ontology module 6 is deriving the meaning 7 by identification of other datasets 9 in the data 3 with identical meaning 7 and confirmation that these datasets 4, 9 have identical values.

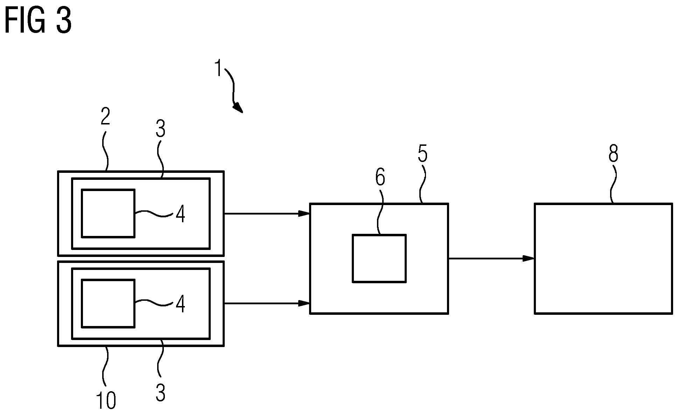

The illustrated embodiment of Fig. 3 shows a further embodiment of the data consolidation system 1 according to Fig. 1 or 2, comprising at least one further source system 10, whereby the semantic data unit 5 derives the meaning of each dataset 4 of the data 3 of all source systems 2, 10 and stores the data 2 and the meaning 7 of the data 2 together in the comprehensive data system 8.

In first instance at the data consolidation workflow all data sets with identical meaning will be identified. Therefore, all datasets 4 of the source system 2 that are identified as the same are linked to the same upper ontology attribute. In a further instance the values of all identified datasets 4 with identical meaning will be compared. In a further instance alerts will be created if values are not identical. Here the concept can be extended to take also the unit of measurement of the values into account if different unit systems are used in the source system.

The Following approach is used to create an ontology from which the meaning of datasets is derived:
The upper ontology is created, describing all basic concepts of the domain. E.g. an object of type PIPE can have the attributes IDENTIFIER, DIAMETER, LENGTH, WALL THICKNESS and INSULATION THICKNESS. For creation of core ontologies existing standards can be used.

For each source system the domain ontology (the source system 2 specific objects and attributes) is linked to the upper ontology, e.g. the attribute INSULATION THICKNESS of the object PIPELINE in the source system 10 is the same as the attribute INSULATION THICKNESS of the object PIPE in the core ontology. Finally, unmapped objects and attributes are reviewed from the source system and refined if needed.

The advantage compared to a direct mapping between each of the source systems is that here for each source systems 2, 10 only one mapping tables to the core ontology needs to be setup and maintained. If a direct mapping between each of the source systems 2, 10 is implemented the number of mapping tables would be typically be higher. For a set number n of connected source systems, the same number n of mapping tables are required in case of a core ontology mapping but n(n-1)/2 mapping tables are required in case of direct mapping.

## Claims

1. Data consolidation system (1) for the combination of data, comprising at least one source system (2) containing data (3) with at least one dataset (4), and a semantic data unit (5), connected to the source system (2), which analyses the data (3) of the source system (2),
**characterized in, that** the semantic data unit (5)
- derives the meaning (7) of all datasets (4) ontologically in an ontology module (6),
- identifies all data (3) with the same meaning (7) of the analyzed dataset (4),
- checks the data integrity of the analyzed data (3) under consideration of the meaning (7),
- stores the data (2) and the meaning (7) of the data together in a comprehensive data system (8).

2. Data consolidation system (1) according to claim 1, wherein the ontology module (6) is deriving the meaning (7) by identification of other datasets (9) in the data (3) with identical meaning (7) and confirmation that these datasets (4, 9) have identical values.

3. Data consolidation system (1) according to claim 1 or 2, wherein the semantic data unit (5) is executed on a processor of a computer which is adapted to receive data (3) from at least one connected source system (2), and to store the processed data to at least one connected comprehensive data system (8).

4. Data consolidation system (1) according to any of the preceding claims 1 to 3, whereby the source system (2) comprises structured data or unstructured raw data of a physical object.

5. Data consolidation system (1) according to the preceding claim 4, wherein the semantic data unit (5) labels the data (2) with meta information about the unstructured data and/or structured data comprising source data, quality metrics and/or key performance indicators.

6. Data consolidation system (1) according to any of the preceding claims 1 to 5, comprising at least one further source system (10), whereby the semantic data unit (5) derives the meaning of each dataset (4) of the data (3) of all source systems (2, 10) and stores the data (2) and the meaning (7) of the data (2) together in the comprehensive data system (8) .

7. Data consolidation system (1) according to any of the preceding claims 1 to 6, whereby the semantic data unit (5) gives an alert message in case of any data inconsistencies.

8. Data consolidation system (1) according to any of the preceding claims 1 to 7, wherein the semantic data unit (5) is implemented on a cloud platform communicating with the source systems via a data network.

9. Data consolidation system (1) according to any of the preceding claims 1 to 8, wherein the data (3) comprise time stamps indicating the time when the data (3) has been processed by the semantic data unit.

10. Method for the consolidation of data, comprising at least one source system (2) containing data (3) with at least one dataset (4), and a semantic data unit (5), connected to the source system (2), which analyses the data (3) of the source system (2), whereby the semantic data unit (5)
- derives the meaning (7) of all datasets (4) ontologically in an ontology module (6),
- identifies all data (3) with the same meaning (7) of the analyzed dataset (4),
- checks the data integrity of the analyzed data (3) under consideration of the meaning (7), and
- stores the data (3) and the meaning (7) of the data together in a comprehensive data system (8).

11. Method for the consolidation of data (1) according to claim 10, wherein the ontology module (6) is deriving the meaning (7) by identification of other datasets (9) in the data (3) with identical meaning (7) and confirmation that these datasets (4, 9) have identical values.

12. Method for the consolidation of data (1) according to any of the preceding claims 10 to 11, wherein the semantic data unit is executed on a processor of a computer which is adapted to receive data from at least one connected source system, and to store the processed data to at least one connected comprehensive data system.

13. Method for the consolidation of data (1) according to any of the preceding claims 10 to 12, whereby the source system comprises structured data or unstructured raw data of a physical object.

14. Method for the consolidation of data (1) according to the preceding claim 13, wherein the semantic data unit labels the data with meta information about the unstructured data and/or structured data comprising source data quality metrics and/or key performance indicators.

15. Method for the consolidation of data (1) according to any of the preceding claims 10 to 14, comprising at least one further source system, whereby the semantic data unit derives the meaning of each dataset of the data of all source systems and stores the data and the meaning of the data together in the comprehensive data system.

16. Method for the consolidation of data (1) according to any of the preceding claims 10 to 15, whereby the semantic data unit gives an alert message in case of data inconsistencies are found.

17. Method for the consolidation of data (1) according to any of the preceding claims 10 to 16, wherein the semantic data unit is implemented on a cloud platform communicating with the source systems via a data network.

18. Method for the consolidation of data (1) according to any of the preceding claims 10 to 17, wherein the data comprise time stamps indicating the time when the data has been processed by the semantic data unit.
